(19) Europäisches Patentamt
European Patent Office
Office européen des brevets

(11) Publication number: 0 023 371
B1

(12) # EUROPEAN PATENT SPECIFICATION

(45) Date of publication of patent specification: 31.08.83

(51) Int. Cl.³: C 09 D 5/16, C 09 D 3/48

(21) Application number: 80200655.1

(22) Date of filing: 07.07.80

(54) **Underwater coating composition.**

(30) Priority: 11.07.79 FR 7918008

(43) Date of publication of application:
04.02.81 Bulletin 81/5

(45) Publication of the grant of the patent:
31.08.83 Bulletin 83/35

(84) Designated Contracting States:
DE FR GB NL

(56) References cited:
AT - B - 243 952
DE - A - 1 571 180
DE - B - 2 425 213
US - A - 3 261 880

(73) Proprietor: ASTRAL Société de Peintures et Vernis
164, Rue Ambroise Croizat
F-93204 Saint-Denis (FR)

(72) Inventor: Penninck, Didier, Dr.
4, Grande Rue Soufraine-Cauffry
F-60290 Rantigly (FR)
Inventor: Riess, Gérard, Prof. Dr.
31, Rue du Mellier
F-68100 Mulhouse (FR)
Inventor: Nuc, Jean-Pierre, Ir.
Rue Pierre Longchamp Breuil le Sec
F-60660 Clairmont (FR)
Inventor: Loulier, Thierry, Dr.
1, Rue Berlioz La Gatelière
F-60300 Senlis (FR)
Inventor: Pacetti, Jean, Ir.
34, Rue de Chateau Zu-Rhein
F-68200 Mulhouse (FR)

(74) Representative: Sieders, René et al,
P.O. Box 314
NL-6800 AH Arnhem (NL)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 023 371 B1

Courier Press, Leamington Spa, England

## Underwater coating composition

The present invention relates to a non-aqueous underwater coating composition comprising a film-forming resin and a non-reactive organic solvent which is partly soluble in water. because of recent technological developments, more particularly as regards marine structures, supertankers and new industrial structures, there is need for very effective corrosion-protective systems. For economical reasons repairs and inspection of structures must be effected very rapidly, which means that in the most urgent cases the coating compositions must be applied under very severe conditions, under the surface of seawater, in rainy weather and in port during loading of ships.

As far as offshore drilling rigs are concerned, the coating compositions to be applied are to satisfy very high requirements in view of the difference in temperature, which may be in excess of 100°C, between pipes and seawater.

The main problems encountered during application of paints, under water are:

1) the difficulty of applying a paint in an aqueous environment;

2) the adhesion during coating of the paint to the cleaned, but already corroded surface;

3) the curing of the paint below the surface of the water;

4) the mechanical and chemical resistance of a cured coating of paint in a very aggressive environment like sea water.

Part of these problems may be solved by: proper cleaning of the surface to be coated and inhibiting corrosion during or after cleaning.

Traces of old paint must be removed and corroded surfaces be cleaned generally by mechanical means, more particularly by underwater sandblasting. The sandblasted surface must as well as possible be freed from oxidized iron particles, marine growth, oil and all other impurities. Sand blasting is carried out under pressure by some economical method.

An underwater paint must have the following properties:

a) capable of being satisfactorily applied under water by brush, roller or high-pressure spray gun;

b) adhere to a metal surface and form a bond between the coating of paint and the substrate;

c) hydrophobicity, so that after the paint has been applied, water will disappear from between the paint and the substrate and out of the paint itself;

d) capable of drying under water, which means that the solvent dissolved in the water, optionally followed by cross-linking of the macro-molecules of the binder;

e) protection from corrosion to the extent obtained with the same paint under normal conditions (normal application in air to a dry metal surface);

f) possibly of re-coating after drying and/or curing.

An object of the present invention is to provide an underwâter coating composition which provides a strong bond with the substrate and which may be applied to the sandblasted metal surface without inhibition step up to 40 hours after sandblasting, permitting the elinination of most of the above-mentioned problems.

The coating composition according to the invention is characterized in that it also contains a carboxylic complexing agent forming a complex with an oxidized iron surface.

It is remarked that US—A—3261880 describes underwater paints comprising a film-forming resin and a specified solvent, however without disclosing the use of the presently claimed carboxylic complexing agents. DE—B2—2425213 refers to the use of specified carboxylic acids in aqueous compositions in order to be used as a rust converting agent or antirust agent. These known compositions are not suggested to be used as an underwater paint. Finally, AT—B—243952 pertains to an antirust primer containing a salt of a bivalent or polyvalent organic nitrogen base with an acid that is capable of forming a complex with iron ions.

The coating composition according to the invention offers a number of advantages. First of all the clean sandblasted surface may be coated more than 40 hours after cleaning without impairing the favourable properties of the coating. A very good adhesion is obtained to old coating layers, due to which re-painting is much facilitated. Another advantage is that the usual coating compositions can be converted into the underwater coating composition according to the invention by adding the complexing agent and the specified solvent. Still another advantage is that protection from corrosion with the modified formulation is much better than with the same non-modified paint system. This is to be attributed to the bond obtained between the moist oxidized metal substrate and the coating as a result of the modification of the binder by the organic complexing agent.

The complexing agent ensures very rapid and durable adhesion of the coating layer to the substrate, even if the latter has already been subject to corrosion. The complexing agent reacts with the hydrated ferrous hydroxide that is formed when an iron surface is cleaned or with the iron surface. Moreover, the complexing agent is soluble in the coating composition, whereas it is only weakly soluble in water. The complex formed after application of the coating composition is preferably non-hydrophilic, not containing any water, and should be compatible with the dry coating layer. In the case where use is made of a reactive diluent the organic complex formed should have a reactive carbon to carbon double bond in order that there may be complete integration of the complex compound in the structure of the coating layer.

As examples of suitable organic acid complexing agents may be mentioned organic mono- or polycarboxylic acids having preferably 2 to 16 carbon atoms such as salicylic acid, hexahydrosalicylic acid, phthalic acid, tetrahydrophthalic acid, hexahydrophthalic acid, terephthalic acid, hexahydroterephthalic acid, isophthalic acid, hexahydroisophthalic acid, benzoic acid, 4-methylbenzoic acid, maleic acid, fumaric acid, methylmaleic acid, methylfumaric acid, tartaric acid, malic acid, trimellitic acid, pyromellitic acid, and the reactive derivatives of anhydrous halogen acids, and more particularly the monoesters of di-, tri- or tetracarboxylic acids and mono-alcohols containing 1 to 22 carbon atoms and diols containing 2 to 12 carbon atoms.

The organic heterocyclic acid complexing agents are very suitable to be incorporated into coating compositions containing epoxy resins cross-linked with polyamines or polyamides. Suitable examples thereof include: 2-pyridine carboxylic acid, 3-pyridine carboxylic acid, 4-pyridine carboxylic acid, pyridine-2,3-dicarboxylic acid, pyridine-2,4-dicarboxylic acid, pyridine-3,4-dicarboxylic acid, pyridine-2,6-dicarboxylic acid, pyridine-4-hydroxy-2-carboxylic acid, quinolinic acid, 8-hydroxy-quinolinic acid, furan-2-carboxylic acid, tetrahydrofuran-2-carboxylic acid, tetrahydrofuran-2,3-dicarboxylic acid, tetrahydrofuran-tetracarboxylic acid.

As far as compatibility with the coating composition is concerned, the derivative modified with maleic acid or its anhydride are considered very important complexing agents; the reactions and the chemical compounds are given below:

1) 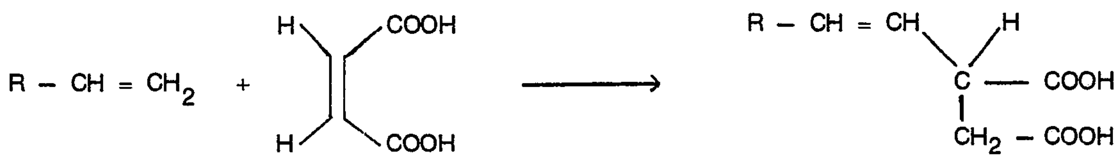

2) 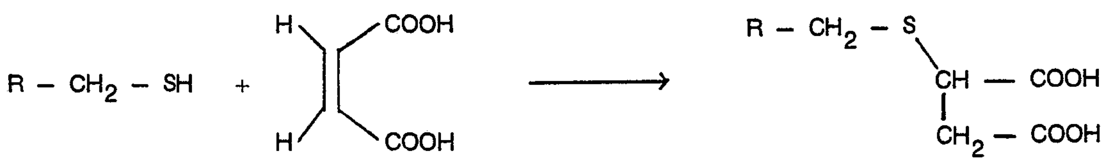

3) 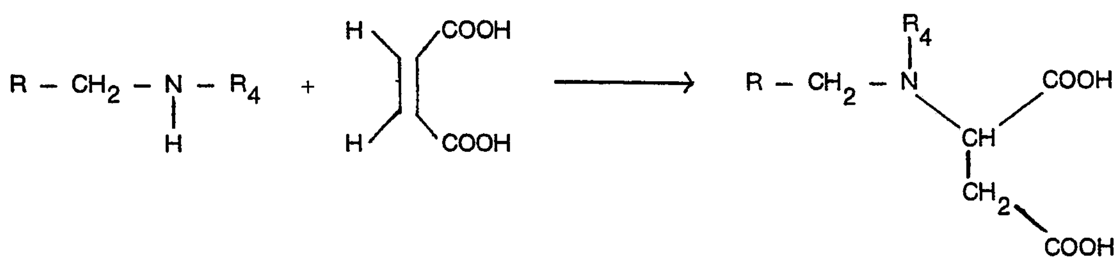

Reaction 1) is the addition of an olefin to the double bond; R is a hydrogen atom or an aliphatic, cycloaliphatic or aromatic group having from 1 to 10 carbon atoms.

Reaction 2) describes the addition of thiols to the double bond; the group R is a hydrogen atom or an aliphatic, cycloaliphatic or aromatic group containing from 1 to 20 carbon atoms.

Reaction 3) describes the addition of primary and secondary amines to the double bond of maleic acid or its anhydride; R is a hydrogen atom or an alkyl, cycloalkyl or aryl group having 1 to 2 carbon atoms, and $R_4$ is a hydrogen atom or an aliphatic group having from 1 to 6 carbon atoms in its chain.

The concentration of the complexing agent(s) in the coating composition is generally in the range of from 0,1 to 10% by weight and preferably in the range of from 0,2 to 5% by weight, based on the total weight of the composition.

The complexing agent also may be attached to the resin, for instance in the case of an unsaturated polyester resin based on maleic anhydride, in which the maleic anhydride attached to the polymer chain plays the role of complexing agent.

The non-reactive solvents form an essential element of the coating composition according to the present invention; they are to ensure proper viscosity when the coating composition is being applied; usually an amount of at most 20% by weight, preferably 1—15% by weight, based on the total weight of the composition, is sufficient to obtain a suitable application viscosity. For a complete solubility of all the paint ingredients without the pigments they should be partly soluble in water because of the elimination of water from the surface and to permit diffusion of traces of water through the paint film during drying. The solvent is also so chosen that water can escape through the coating of paint without having any destructive or any other unfavourable effect on it. This last-mentioned property is interesting in that the first layer of corroded iron formed after cleaning the surface is a highly hydrated ferrous hydroxide which holds a water film on its surface. This water film cannot be removed by applying the

traditional coating of paint and the paint does not at all tend to adhere to the iron substrate.

These non-reactive solvents must have a solubility in water in the range of 0,5 to 6 g/100 g water. Suitable examples include: diethyl ketone, methylisobuty ketone, dipropyl ketone, propyl acetate, isopropyl acetate, butyl acetate, isobutyl acetate, tert.butyl acetate, n-pentyl acetate.

The film forming resins that are suitable to be used in the present underwater coating compositions are binders or systems that are commonly used in industrial paints, decorative paints and paints used by amateur painters. Examples of suitable resins more particularly include alkyd resins, saturated or unsaturated polyesters, polyester resins having a molecular weight in the range of from 3000 to 20000, epoxy polyester resins having a molecular weight in the range of from 5000 to 30000, epoxy resins, unsaturated acrylic resins, chlorinated rubbers, high-molecular weight polyesters or phenoxy resins having a molecular weight in the range of from 6000 to 50000, saturated or unsaturated phenolic resins, vinyl resins and combinations of these resins. The resins may optionally be mixed with an inert solvent, a reactive solvent and/or a reactive diluent. A reactive diluent assists in providing a properly cross-linked underwater coating.

Preference is given to a system made up of an epoxy compound containing a curing agent therefor such as a diamine, a polyamine or a polyamide-polyamine compound.

Suitable diepoxides are diglycidyl ether of a (cyclo)aliphatic or aromatic compound, e.g. an aliphatic diol having from 2 to 12 carbon atoms in its chain or an aromatic diol based on a bisphenol derivative such as Bisphenol-A. Examples are the liquid epoxides such as Epikote 815 (marketed by Shell Chemicals; "Epikote 815" is a registered trademark) which is a mixture of aromatic diepoxides and aliphatic epoxy solvents (reactive diluents) that are used in the absence of a solvent, or the pure aromatic bisphenol-A diglycidyl ether that is employed in the presence of methylisobutyl ketone as solvent.

As a curing agent for the epoxy compound(s) use may be made of a polyamine having the following general formula

$$H_2N—(CH_2—CH_2—NH)_n—CH_2—CH_2—NH_2$$

where n is a number in the range of from 1 to 4. Polyamido amines based on the condensation products of dimeric fatty acids and the above-described polyamines are particularly useful. The amine number of the polyamido amines must be in the range of 100 to 400, preferably to 300.

Unsaturated polyester may be condensation products of maleic anhydride and one or more diols or polyols and optionally one or more monocarboxylic acids or other acids, said polyester being mixed with monomers such as styrene, vinyl pyridine, vinyl pyrrolidone and alphamethylstyrene. When a mixture of a polyester or an alkyd resin with a reactive diluent is used, a polymerization catalyst might also be present.

When acrylic thermoplastic resins are used they are generally mixed with a diacrylate and/or triacrylate monomer. Instead of a polyacrylate, a polyacryl and polystyrene-containing polymer optionally together with an underwater cross linking catalyst may be used.

When polyesters, phenoxy resins and higher or high molecular weight phenolic resins are used in combination with a reactive solvent, these polymers serve to form a skeleton after application of the coating compositions. During the drying and cross-linking underwater a cross-link network is formed. For these resins the following reactive solvents are employed: styrene, alpha-methylstyrene, vinylpyridine, vinylpyrrolidone, ethylene diacrylate or dimethacrylate, butylene diacrylate or dimethacrylate, neopentylglycol di(meth)acrylate, hexanediol di(meth)acrylate, the di- or tri(meth)-acrylic ester of trimethylolpropane, the di- or tri(methy)acrylic ester of trimethylol ethane and the di-, tri or tetra(meth)acrylic ester of pentaerythritol.

Vinyl resins that may be used in the coating compositions according to the invention include among others 1,2-polybutadiene, 1,2-polybutadiene having carboxylic, hydroxy or epoxy end groups; 1,4-cis- and 1,4-transpolybutadiene, 1,4-cis-trans-1,2-polybutadiene having different 1,4/1,2 ratios ranging between 10 and 90%; copolymers of butadiene and styrene and optionally other comonomers, copolymers of butadiene and acrylonitrile, polycyclopentadiene and copolymers of cyclopentadiene and indene having an iodine number in the range of from 30 to 80. These vinyl resins are preferably used in combination with an acryl or vinyl monomer as a reactive diluent or solvent in the presence of the respective catalyst.

Resins such as chlorinated rubbers, vinyl resins, polyester resins having a molecular weight in the range of from 3000 to 20000, epoxy polyester resins having a molecular weight in the range of from 5000 to 30000, phenoxy resins having a molecular weight in the range of from 6000 to 50000 and phenolic resins are preferably dissolved in a non-reactive solvent. Examples of suitable reactive diluents or solvents include styrene, alpha-methylstyrene, divinyl benzene, ethylstyrene, vinylpyrrolidone, vinylpyridine, methyl (meth)acrylate, ethyl (meth)acrylate, propyl (meth)acrylate, butyl (meth)acrylate, pentyl (meth)acrylate, hexyl (meth)acrylate, heptyl (meth)acrylate, actyl (meth)acrylate, 2-ethyl-hexyl (meth)-acrylate, dodecyl (meth)acrylate, octadecyl (meth)acrylate, (meth)acrylonitrile and (meth)acrylamide.

For underwater cross-linking preference is given to the following, generally employed peroxide catalysts: benzoyl peroxide, dibenzoyl peroxide, cyclohexanone peroxide, cumene hydroperoxide. The

peroxides are used together with a reducing agent, such as a tertiary amine or metal compounds: dimethylaniline, dimethylbenzylamine, cobalt octoate.

The coating compositions according to the present invention may of course contain, among other things: reactive diluents which during application serve as diluent and subsequently act as cross-linking agents; cross-linking catalysts; pigments; surface-active compounds; thixotropic agents; additives that inhibit decay on ships' hulls and marine structures and compounds like silicone oil and other silicium compounds to improve the levelling and the hydrophobic properties.

Suitable pigments are, for example, ferric oxide, titanium dioxide, mica, micaceous iron oxide, and special pigments like minium, lead silicochromate, lead silicophosphate, lead oxide, lead silicate, strontium chromate, lead chromate and zinc pigments.

Surface active compounds are, for example, silicone oil and propylene glycol having a molecular weight between 1500 and 5000.

Suitable thixotropic agents are, for example, bentonite and products based on diurea compounds and other additives preventing sagging.

Suitable pigments and additives against decay and fouling, are for example, tin tirbutyl oxide, tin dibutyl oxide, copper oxide and zinc oxide.

For the purpose of comparison and to carry out laboratory experiments use is made of the apparatus shown in Figure 1, comprising a bath of seawater 1 containing a tank of paint 2. Cleaned test panels 3 are placed in the bath 1 and subsequently immersed in the paint tank 2 with the aid of a mechanical system 4. The minimum time is measured which the paint takes to adhere to the surface of the test panel.

The test equipment shown in the Figures 2a, 2b and 2c permits carrying out a practical evaluation immediately upon the adhesion of the paint under water. This equipment essentially comprises a bath of seawater 10 containing a horizontally positioned disc 11 set into rotation by a shaft 12 and a motor 13. The upper surface of this disc is provided with recesses 14 for holding the metal test panels 15. In these experiments a drop of paint is deposited on each test panel and at different rotational speeds the behaviour of the drop is evaluate visually. By this procedure only those paint compositions are considered positive whose adhesion to the substrate is good or very good.

The invention is further described in but not limited by the following examples. Parts are parts by weight and percentages are percentages by weight.

### Example 1

Blank Part A

Underwater paints are prepared as follows: a chlorinated rubber is dissolved in butyl acetate. The chlorinated rubber is contained in the solvent in an amount of 35% by weight.

The paint has the following composition:

| | |
|---|---|
| 35% solution of chlorinated rubber in butyl acetate | 50 parts |
| ferric oxide | 10 parts |
| micaceous iron oxide | 34 parts |
| red lead | 4 parts |
| Bentonite 34 (registered trademark) | 2 parts |

Part B

Use is made of the same paint composition as in Part A (blank), except that according to the invention 4% of a 20%-solution of salicylic acid in butyl acetate is added to the paint composition. The test is carried out on a steel panel sandblasted for 10 minutes in the apparatus according to Figure 1. Subsequently, the panel is immersed for a period ranging from 1 to 40 hours. The results are given in Table 1. During immersion the rotatory testing device immediately gives the adhesion as a function of the immersion time of the sandblasted panels (see Table 2).

TABLE 1

Time it takes for the paint to adhere to its substrate as a function of immersion time and organic complexing compound contained in the paint.

| Paint \ Immersion time | 10 min | 1 h | 5 h | 15 h | 20 h | 30 h | 40 h |
|---|---|---|---|---|---|---|---|
| Paint of Example 1, part A | 60–70 min | 65–70 min | 120–130 min | – | – | – | – |
| Paint of Example 1, part B | immediately | immediately | immediately | 15–10 sec | 10÷30 sec | 1–3 min | 5–10 min |

TABLE 2

Adhesion test with the aid of the rotary device

| TPM | 50 | 100 | 300 | 700 | 1400 |
|---|---|---|---|---|---|
| Paint of Example 1, part A | – | – | – | – | – |
| Paint of Example 1, part B | good | good | good | good | good |

Example 2

An underwater coating composition is prepared by mixing 100 parts of Component I with 25 parts of Component II.

| Component I: | parts |
|---|---|
| epoxy resin (marketed by Shell under the trademark Epikote 828) | 50 |
| ferric oxide | 19 |
| micaceous iron oxide | 23 |
| strontium chromate | 5 |
| 20% solution of maleic acid in methylisobutyl ketone | 3 |
| **Component II (curing agent):** | |
| aromatic polyamine (marketed by Anchor Chem under the trademark Ancamine LT) | 95 |
| butyl acetate | 5 |

Example 3

An underwater composition is prepared by mixing 100 parts of Component I with 27 parts of Component II.

| Component I: | parts |
|---|---|
| epoxy resin (marketed by Shell under the trademark Epikote 815) | 50 |
| ferric oxide | 15 |
| micaceous iron oxide | 20 |
| lead phosphosilicate | 10 |
| red lead | 3 |
| 20% solution of dodecylene succinic acid in amyl acetate | 2 |
| **Component II:** | |
| curing agent (marketed by victor Wolf under the trademark Wolfamide-2) | 95 |
| methylisobutyl ketone | 5 |

Example 4

An underwater coating composition is prepared by mixing 100 parts of Component I with 1,6 parts of Component II.

| Component I: | parts |
|---|---|
| 70% solution of an unsaturated polyester in styrene | 41,7 |
| pyridine-2,3-dicarboxylic acid | 0,5 |
| ferric oxide | 10,0 |
| micaceous iron oxide | 34,0 |
| red lead | 4,0 |
| Bentonite 34 (registered trademark) | 2,0 |
| dimethylaniline | 0,05 |
| hexamethylene dicrylate | 8,3 |
| **Component II:** | |
| benzoyl peroxide | 50 |
| mixture of water and methylisobutyl ketone | 50 |

Example 5

An underwater composition is prepared by mixing 100 parts of Component I with 2,0 parts of Component II.

| Component I: | parts |
| --- | --- |
| 80% solution of epoxy resin (marketed by Shell under the trademark (Epikote 1001) in methylethyl ketone | 40 |
| diacrylic ester of 1,1'-isopropylidene-bis-p-(phenylene-oxy)-di-ethanol-2 | 10 |
| ferric oxide | 20 |
| micaceous iron oxide | 25 |
| 20% solution of maleic acid in methylisobutyl ketone | 5 |
| Component II: | |
| benzoyl peroxide | 50 |
| a mixture of water and methylisobutyl ketone | 50 |

The coating compositions according to the Examples 1—5 are applied under water onto cleaned sandblasted test panels. The panels are kept in seawater at 25°C over a period of 24 months. The results and other data are given in Table 3.

TABLE 3

| Composition according to Example | 1 A (blank) | 1 B | 2 | 3 | 4 | 5 |
|---|---|---|---|---|---|---|
| Mode of application | immersion | immersion | brush | brush | brush | brush |
| Paint adhesion (immersion test) | poor | good | good | good | good | good |
| Appearance of the paint film | poor | sagging at ends | good | good | good | good |
| Thickness of the film (microns) | 0–200 | 150–300 | 200–250 | 200–250 | 250–300 | 250–300 |
| Corrosion test in seawater (25°C) | corrosion after 2 weeks: disappearance of film after 2 months | first signs of corrosion on top of coating after 19 months | corrosion after 17 months | no corrosion 24 months | no corrosion 24 months | no corrosion 24 months |

Example 6

An anti-decay coating composition based on cross-linkable acrylic resin is prepared by mixing 100 parts of Component I with 1,7 parts of Component II.

| Component I: | parts |
|---|---|
| a 7% solution of an acrylic resin that contains 16% tributyltinoxide in methylisobutyl ketone | 50 |
| butyl acrylate | 8,0 |
| styrene | 6,5 |
| ferric oxide | 12,0 |
| micaceous iron oxide | 15,0 |
| copper oxide | 8,0 |
| maleic acid | 0,5 |

| Component II: | parts |
|---|---|
| benzoyl peroxide | 50 |
| water | 50 |

Example 7

Two series of 10 test panels are sandblasted and subsequently immersed in a seawater bath. After 12 hours they are roller coated with the compositions of the Examples 2 and 4. The coating thickness after drying is 220—250 microns. After 6 hours a topcoat according to Example 6 is applied by roller in the same bath at 25°C.

The thickness of the topcoat is 150—200 microns. All panels have a satisfactory appearance, dry well and display an excellent resistance to corrosion.

At the end of a test period of 2 years the flat parts of the panels do not show any corrosion at all. Viewed in cross-section they are slightly corroded, but without any penetration between the substrate and the coating of paint.

After 18 months the panels display excellent anti-decay properties at the test station in the open sea.

**Claims**

1. Non-aqueous underwater coating composition comprising a film-forming resin and a non-reactive organic solvent which has a solubility in water between 0.5 and 6 g/100 g water, characterized in that is also contains a carboxylic complexing agent forming a complex with an oxidized iron surface.

2. A coating composition according to claim 1, characterized in that the complexing agent is selected from the group comprising: organic mono- or polycarboxylic acids; monoesters of di-, tri- or tetracarboxylic acids and monoalcohols containing 1 to 22 carbon atoms and diols containing 2 to 12 carbon atoms; organic heterocyclic acids and adducts of maleic acid or its anhydride to an olefin.

3. A coating composition according to claim 1 or 2, characterized in that the complexing agent is maleic acid, salicylic acid, dodecylene succinic acid or pyridine-2,3-dicarboxylic acid.

4. A coating composition according to any one of the claims 1 to 3, characterized in that the concentration of the complexing agent(s) in the coating composition is in the range of from 0,1 to 10% by weight based on the total weight of the composition.

**Revendications**

1. Composition de revêtement subaquatique non-aqueuse comprenant une résine formant pellicule et un solvant organique non réactif qui a une solubilité dans l'eau comprise entre 0,5 et 6 g/100 g d'eau, caractérisée en ce qu'elle contient également un agent de complexation carboxylique formant un complexe avec une surface de fer oxydée.

2. Composition de revêtement selon la revendication 1, caractérisée en ce que l'agent de complexation est choisi dans le groupe comprenant: les acides mono- ou polycarboxyliques organiques; les monoesters d'acides di-, tri- ou tétracarboxyliques, et les monoalcools contenant de 1 à 22 atomes de carbone et les diols contenant de 2 à 12 atomes de carbone; les acides hétérocycliques organiques

et les produits d'addition de l'acide maléique ou de son anhydride sur une oléfine.

3. Composition de revêtement selon l'une des revendications 1 ou 2, caractérisée en ce que l'agent de complexation est l'acide maléique, l'acide salicylique, l'acide dodécylènesuccinique ou l'acide pyridine-2,3-dicarboxylique.

4. Composition de revêtement selon l'une des revendications 1 à 3, caractérisée en ce que la concentration du ou des agents de complexation dans la composition de revêtement se situe dans un intervalle allant de 0,1 à 10% en poids par rapport au poids total de la composition.

**Patentansprüche**

1. Nicht-wäßrige Unterwasser-Überzugszusammensetzung, umfassend ein filmbildendes Harz und ein nicht-reaktives organisches Lösungsmittel, welches eine Löslichkeit in Wasser zwischen 0,5 und 6 g/100 g aufweist, dadurch gekennzeichnet, daß sie außerdem ein Carboxyl-Komplexierungsmittel enthält, welches mit einer oxidierten Eisenoberfläche einen Komplex bildet.

2. Eine Überzugszusammensetzung nach Anspruch 1, dadurch gekennzeichnet, daß das Komplexierungsmittel aus der Gruppe ausgewählt ist, welche organische Mono- oder Polycarbonsäuren; Monoester von Di-, Tri- oder Tetracarbonsäuren und Monoalkoholen enthaltend 1 bis 22 Kohlenstoffatome und Diolen enthaltend 2 bis 12 Kohlenstoffatome; organische heterocyclische Säuren und Addukte von Maleinsäure oder dessen Anhydrid an ein Olefin umfaßt.

3. Eine Überzugszusammensetzung nach Anspruch 1 oder 2, dadurch gekennzeichnet, daß das Komplexierungsmittel Maleinsäure, Salicylsäure, Dodecylenbernsteinsäure oder Pyridin-2,3-dicarbonsäure ist.

4. Eine Überzugszusammensetzung nach irgendeinem der Ansprüche 1 bis 3, dadurch gekennzeichnet, daß die Konzentration des(der) Komplexierungsmittel(s) in der Überzugszusammensetzung im Bereich von 0,1 bis 10 Gewichtsprozent, bezogen auf das Gesamtgewicht der Zusammensetzung, liegt.

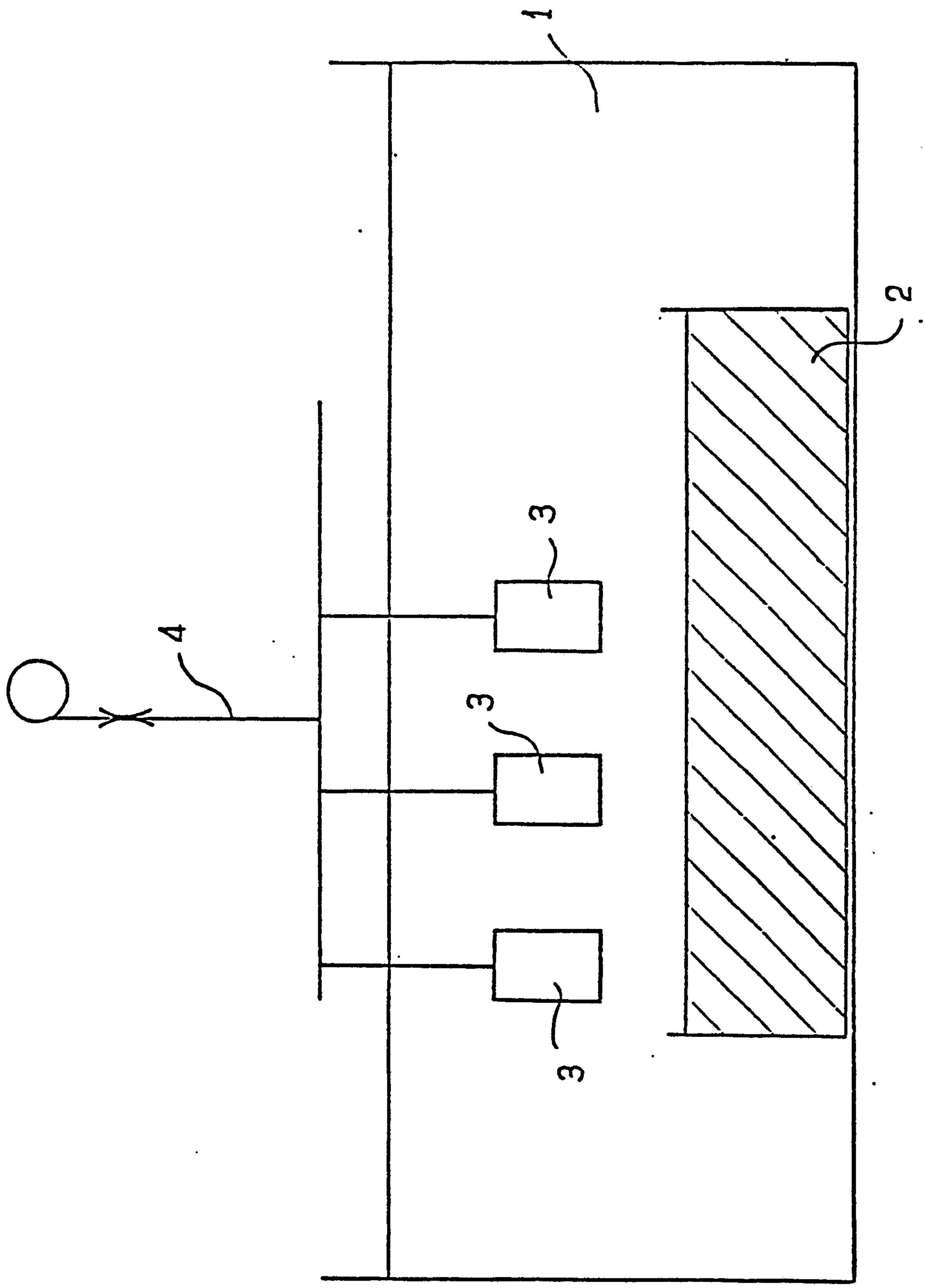


FIG_1

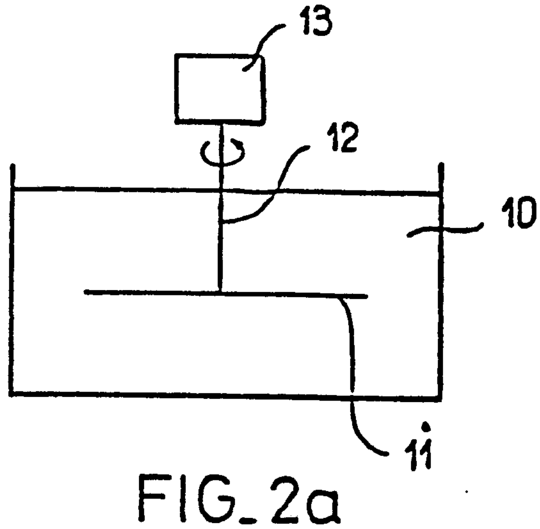


FIG_2a

FIG_2b

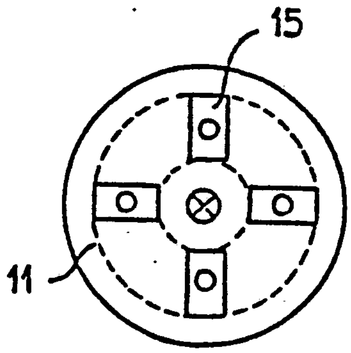


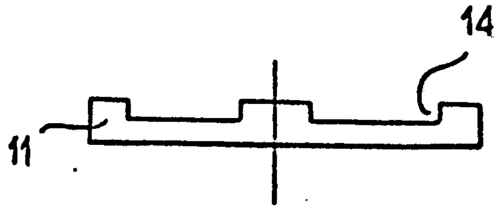


FIG_2c